**Europäisches Patentamt**

**European Patent Office**

**Office européen des brevets**

(19)

(11)　**EP 1 510 547 A1**

(12)　# EUROPEAN PATENT APPLICATION

(43) Date of publication:
　　**02.03.2005　Bulletin 2005/09**

(51) Int Cl.$^7$: **C08L 23/10**, C08L 23/12

(21) Application number: **03018363.6**

(22) Date of filing: **13.08.2003**

(84) Designated Contracting States:
　　**AT BE BG CH CY CZ DE DK EE ES FI FR GB GR
　　HU IE IT LI LU MC NL PT RO SE SI SK TR**
　　Designated Extension States:
　　**AL LT LV MK**

(71) Applicant: **Borealis Technology OY
　　06201 Porvoo (FI)**

(72) Inventors:
　　• **Grein, Christelle
　　4020 Linz (AT)**

　　• **Bernreitner, Klaus, Dipl.-Ing.
　　4010 Linz (AT)**
　　• **Gahleitner, Markus, Dipl.-Ing.Dr.
　　4501 Neuhofen/Krems (AT)**

(74) Representative: **VA TECH Patente GmbH & Co
　　Stahlstrasse 21a
　　4031 Linz (AT)**

(54)　**Novel polypropylene compositions with improved resistance to stress whitening**

(57)　　The invention relates to polypropylene compositions having an improved balance of impact strength and resistance to stress whitening comprising heterophasic propylene copolymers and low density ethylene polymers having strain hardening behaviour.

**EP 1 510 547 A1**

**Description**

The invention refers to polypropylene compositions having an improved balance of impact strength and resistance to stress whitening. More particularly, the invention refers to polypropylene compositions comprising heterophasic propylene copolymers and ethylene polymers.

There are essentially two different kinds of heterophasic propylene copolymers known in the art: Heterophasic copolymers comprising a propylene random copolymer as matrix phase (RAHECO) and heterophasic copolymers having a propylene homopolymer as matrix phase (HECO). RAHECO's are mainly used for soft fibres and soft films. HECO's are used for a wide variety of applications, including household appliances and car bumpers, because of their good mechanical properties, especially impact strength. For the purpose of this application, the expression "heterophasic copolymers" or "heterophasic propylene copolymers" always refers to heterophasic copolymers having a propylene homopolymer as matrix phase.

Heterophasic propylene copolymers (HECO or "impact copolymers" or "block copolymers") suffer from an inherent lack in resistance to stress whitening (SW). The SW effect occurs under tensile or impact loading and deteriorates the aesthetic qualities of parts made from these HECO's.

Several methods have been published in the past to overcome the problem of SW. All these methods have drawbacks regarding properties of the resulting material (mechanical and/or optical properties) or regarding the required production process (technology or costs).

US 4,526,931 discloses high molecular weight ethylene propylene copolymers having a specific ratio of the intrinsic viscosities of matrix and elastomer phase. These copolymers are produced in a four stage polymerisation process, which is very costly. Resistance to SW is not satisfying for these copolymers.

EP 0 768 338 A1 discloses the modification of propylene homo- and copolymers with highly amorphous polypropylene, which results in an improvement of the resistance to SW, but also in a reduction of stiffness and low temperature impact strength.

EP 0 826 728 A2 describes modified polypropylenes with reduced SW, where a combination of 5-50 wt% of ethylene copolymers together with nucleating agents has the effect of improving the SW resistance and stiffness modulus and simultaneously reducing the impact strength. The disclosure of EP 0 826 728 A2 is only applicable to propylene homopolymers.

EP 1 236 769 A1 claims a three-component-system with a polypropylene homo or propyleneethylene random polymer matrix and two different elastomeric phases, one of which is an ethylene plastomer with a density below 0,91 $g/cm^3$ and an MFR (190/2,16) of at least 0,5 g/10min. The sequential polymerisation of the matrix and the first elastomer are also described. The used plastomers are metallocene catalyst derived plastomers. These plastomers are however very expensive and they do not have a positive effect on the stress whitening resistance of heterophasic polymers.

It is therefore the object of the invention to provide heterophasic polypropylene compositions having an improved balance of impact strength and stress whitening resistance. It is a further object of the invention that - compared to the prior art - the improved balance of impact strength and stress whitening resistance is achieved in a cost-efficient manner.

This object is achieved by a polypropylene composition having an improved balance of impact strength and resistance to stress whitening, comprising

A) 70 - 98 wt% of a heterophasic propylene copolymer comprising

a1) a propylene homopolymer matrix phase having an isotacticity $IR\tau \geq 0,97$ and a melting temperature $T_m > 160\ °C$ and

a2) a disperse phase comprising a propylene copolymer with ethylene and/or one or more $C_4$-$C_{12}$-$\alpha$-olefins, said disperse phase being predominantly amorphous and further comprising crystalline inclusions

said heterophasic copolymer comprising 2 - 20 wt% ethylene and/or one or more $C_4$-$C_{12}$-$\alpha$-olefins,

B) 2 - 30 wt% of an ethylene polymer comprising 0 - 5 wt% of one or more $C_4$-$C_{12}$-$\alpha$-olefins, the ethylene polymer exhibiting strain hardening behaviour and having a density $\rho \leq 930\ kg/m^3$,

the polypropylene composition having an $MFR_{FM}$ of from 0,5 - 500 g/10 min (230 °C/2,16 kg) and where the relation between $MFR_A$ (230 °C/2,16 kg) of the heterophasic propylene copolymer and $MFR_{FM}$ is according to the equation

$$0,7 \times MFR_A \leq MFR_{FM} \leq 1,2 \times MFR_A.$$

Propylene homopolymers having a melting temperature $T_m > 160\ ^\circ$C are typically obtained by polymerisation with Ziegler-Natta type catalysts and therefore have a broad molecular weight distribution $M_w/M_n$ of from about 4 to 10.

Heterophasic propylene copolymers having as matrix phase a propylene homopolymer with a broad molecular weight distribution are characterised by high stiffness, high softening temperature and short cycle time in the injection moulding process. Heterophasic propylene copolymers having as matrix phase a propylene homopolymer with a narrower molecular weight distribution do not possess this combination of features (e.g. they show longer cycle times, but lower stiffness). It is therefore especially desirable to improve the heterophasic propylene copolymers having as matrix phase a propylene homopolymer with a broad molecular weight distribution by increasing their stress whitening resistance and simultaneously improving their impact properties.

The heterophasic propylene copolymer A) which are used in the present invention are reactor-made and are synthesised in a sequential polymerisation process. Heterophasic propylene copolymers produced in a sequential polymerisation process typically contain a disperse phase comprising crystalline inclusions. It has been found that such heterophasic propylene copolymers are more susceptible to improvements in stress whitening resistance than heterophasic propylene compositions where the disperse phase does not contain crystalline inclusions.

The disperse phase of the heterophasic propylene copolymer is predominantly amorphous, preferably the crystallinity is below 30 %, more preferably below 20 %.

It has surprisingly been observed, that heterophasic propylene copolymers having a high stereoregular propylene homopolymer matrix phase can be modified to show improved SW, while showing no deterioration or even an improvement in impact strength with low density ethylene homo- or copolymers having strain hardening behaviour.

In the basic embodiment, the density of the ethylene polymer is $\leq 930$ kg/m$^3$, however, still better results regarding SW are achieved with ethylene polymers having a density $\leq 925$ kg/m$^3$. Densities for the ethylene polymer of $< 900$ kg/m$^3$ are not preferred. A preferred lower limit for the density of the ethylene polymer is 910 kg/m$^3$, as lower densities limit the tensile modulus and also the heat resistance of the final composition.

$MFR_{FM}$ is the MFR of the entire polypropylene composition, $MFR_A$ is the MFR of the heterophasic propylene copolymer. The melt index of the ethylene polymer is selected such that $MFR_{FM}$ is within the range of from $0,8$ x $MFR_A \leq MFR_{FM} \leq 1,2$ x $MFR_A$. If this condition is not met, either SW or impact strength is not satisfactory.

Outside this range either the too high viscosity of the polyethylene modifier either impairs the dispersion quality, resulting in material inhomogeneity and defects, or the too low molecular weight of the modifier reduces the impact strength and creates problems due to surface migration of low molecular weight components of the modifier.

The IR$\tau$ of the propylene homopolymer matrix phase of the heterophasic propylene copolymer is determined by Infrared spectroscopy and calculated as described in EP 0 277 514 A2 on page 3 (especially column 3, line 37 to column 4, line 30) and page 5 (column 7, line 53 to column 8, line 11).

According to a preferred embodiment the propylene homopolymer matrix phase of the heterophasic propylene copolymer has an IR$\tau$ of $\geq 0,980$, more preferably of $\geq 0,985$. The difference of 0.005 in IR$\tau$, IR$\tau$ being a measure for isotacticity, encompasses a significant increase in polymer properties, especially in stiffness.

In case of a linear chain structure - i.e. without long-chain branching - polymer melts exhibit a thinning behaviour under both shear and extensional deformation, meaning that with increasing rate of shear or extension the melt viscosity is reduced. Opposed to that, melts with chain branches above a length corresponding to the critical molecular weight ($M_C = 2\ M_E$, where $M_E$ is the average molecular weight between two entanglements of the polymer), show an increase of viscosity in extension with increasing rate. This behaviour is called strain hardening and is an indication for the presence of long-chain branching. Polyethylene homo- and copolymers either produced in a high pressure process without catalysts or alternately in a low-pressure process with specific single-site catalysts show this behaviour, expressed for example in a superproportional increase of force at constant acceleration in the Rheotens test.

According to a further embodiment the polypropylene composition of the invention comprises up to 1 wt%, based on the entire polypropylene composition, of $\alpha$-nucleating agents.

Adding a small amount of $\alpha$-nucleating agent is advantageous, because it increases stiffness (Tensile Modulus) of the polypropylene composition. Depending upon the amount and efficiency of the $\alpha$-nucleating agent, stiffness of the entire polypropylene composition may be increased up to or even higher than the stiffness of the unmodified heterophasic propylene copolymer containing no ethylene polymer.

SW and low temperature impact strength (-20 $^\circ$C) are not or only very little affected by the addition of $\alpha$-nucleating agent, while impact strength at ambient temperature decreases.

A preferred $\alpha$-nucleating agent is NA21, which is commercially available from Asahi Denka Kogyo (Japan) under the name "ADK STAB NA21E".

According to a further embodiment the polypropylene composition of the invention comprises up to 5 wt%, based on the entire polypropylene composition, of amorphous hydrocarbon resins having a glass transition temperature $T_g < 23\ ^\circ$C.

According to a further embodiment the polypropylene composition of the invention comprises up to 5 wt%, based on the entire polypropylene composition, of amorphous hydrocarbon resins having a glass transition temperature

$T_g < 23\ °C$, which may reduce stress whitening by reducing the internal voiding process. This effect is achieved by a so-called "mobilising effect" of these components, which makes the crystalline parts of the polymeric composition more mobile and thus reduces void formation. To be effective at the application temperature the glass transition must be below ambient temperature. A higher content than 5 wt% is not desirable because phase separation may occur then, increasing the solubles content and reducing mechanical performance

According to a further embodiment the polypropylene composition of the invention comprises 80 - 95 wt% of A) and 5 - 20 wt% of B).

A further object of the invention is a process for producing polypropylene compositions having the desired properties.

Such a process for producing a polypropylene composition having an improved balance of impact strength and resistance to stress whitening, comprises mixing

70 - 98 wt% of a heterophasic propylene copolymer A) comprising

> a1) a propylene homopolymer matrix phase having an isotacticity $IR\tau \geq 0,97$ and a melting temperature $T_m > 160\ °C$ and
> a2) a disperse phase comprising a propylene copolymer with ethylene and/or one or more $C_4$-$C_{12}$-$\alpha$-olefins, said disperse phase being predominantly amorphous and further comprising crystalline inclusions

with

2 - 30 wt% of an ethylene polymer B) comprising 0 - 5 wt% of one or more $C_4$-$C_{12}$-$\alpha$-olefins, the ethylene polymer exhibiting strain hardening behaviour and having a density $\rho \leq 930\ kg/m^3$,

the polypropylene composition having an $MFR_{FM}$ of from 0,5 - 500 g/10 min (230 °C/2,16 kg) and where the relation between $MFR_A$ (230 °C/2,16 kg) of the heterophasic propylene copolymer and $MFR_{FM}$ is according to the equation

$$0,7 \times MFR_A \leq MFR_{FM} \leq 1,2 \times MFR_A,$$

homogenising and melting the mixture.

Advantageous embodiments of the inventive process include adding up to 1 wt% based on the polypropylene composition of one or more $\alpha$-nucleating agents and/or adding up to 5 wt%, based on the entire polypropylene composition, of amorphous hydrocarbon resins having a glass transition temperature $T_g < 23\ °C$.

The polymer compositions of the present invention can be used for the production of injection-moulded, blow moulded or injection stretch blow moulded articles for packaging applications or technical purposes, where a combination of high impact strength and high resistance to stress whitening is required.

The heterophasic propylene copolymer A) may be produced by multistage process polymerisation of propylene or propylene and ethylene and/or an $\alpha$-olefin such as bulk polymerisation, gas phase polymerisation, slurry polymerisation, solution polymerisation or combinations thereof using conventional catalysts. Those processes are well known to one skilled in the art.

A preferred process is a combination of a bulk slurry loop reactor(s) and gas phase reactor(s). The matrix polymer can be made either in loop reactors or in a combination of loop and gas phase reactor.

The polymer produced in this way is transferred into another reactor and the disperse phase, which in this case is a propylene/$\alpha$-olefin rubber, is polymerised. Preferably this polymerisation step is done in a gas phase polymerisation.

A suitable catalyst for the polymerisation of the heterophasic copolymer is any stereospecific catalyst for propylene polymerisation which is capable of polymerising and copolymerising propylene and comonomers at a temperature of 40 to 110 °C and at a pressure from 10 to 100 bar. Ziegler Natta catalysts are especially suitable catalysts. The catalyst systems, i.e. the combination of catalyst and external donor, are chosen such as to achieve an isotacticity $IR\tau$ of the homopolymer matrix of $\geq 0,97$.

One skilled in the art is aware of the various possibilities to produce such heterophasic systems and will simply find out a suitable procedure to produce suitable heterophasic polymer systems which are used in the present invention.

Polyethylene homo- and copolymers useful as modifiers to improve the balance between impact strength and stress whitening resistance of PP copolymers as described in this document can be either produced (a) in a high pressure process without catalysts or alternately (b) in a low-pressure process with specific single-site catalysts. While in case (a) the density is mainly defined by the polymerisation conditions like temperature, pressure and residence time distribution as described e.g. in Kalyon et al. *Polym.Eng.Sci.* **34** (1994) 804-814, the amount of comonomer determines the density in case (b). Suitable comonomers are $\alpha$-olefins with 4-12 carbon atoms; suitable catalysts to achieve strain-hardening behaviour in case (b) are for example supported or non-supported catalysts based on specific metallocene complexes like rac-[ethylenebis(2-tert-butyldimethylsiloxyl)indenyl)]zirconium dichloride or rac-[ethylenebis(1-tert-butyldimethylsiloxyl)indenyl)]zirconium dichloride (see Malmberg et al. *Macromolecules* **32** (1999) 6687-6696 and **35** (2002) 1038-1048). However, the majority of metallocene complexes applied for ethylene polymerisation does not produce such long-chain branched structures with strain hardening.

**Measurement methods**

**MFR**

The melt flow rates were measured with a load of 2,16 kg at 230 °C for polypropylene and at 190 °C for polyethylene. The melt flow rate is that quantity of polymer in grams which the test apparatus standardised to ISO 1133 extrudes within 10 minutes at a temperature of 230 °C or 190 °C respectively, under a load of 2,16 kg.

**Charpy notched impact strength**

The Charpy notched impact strength (NIS) was determined according to ISO 179 / 1eA at 23 °C and at -20 °C by using injection moulded test specimens as described in EN ISO 1873-2(80x10x4mm).

**Tensile test**

Tensile test was performed according to ISO 527-3 using injection moulded specimens as described in EN ISO 1873-2 (dog bone shape, 3 mm thickness). Tensile modulus (E-modulus) was also determined according to ISO 527-3 and calculated from the linear part of the tensile test results.

**Stress Whitening**

Stress Whitening has been measured using a method according to F. Altendorfer, H.P. Frank, Kunststoffe 70 (1980) page 98 -101. The width of a modified test specimen F 3/3 (dog bone specimen) according to DIN 53455/1981 is reduced from 10 to 8 mm by a rounded central notch; the development of turbidity at this point is then recorded in a tensile test procedure. The test parameters are:

| Test speed | 5 mm/min |
|---|---|
| Fixation length | 110 mm |
| Measurement length | 50 mm |
| Test temperature | 23 °C |

A Turbidity/Elongation-Diagram is recorded using the optical sensor system as described by F. Altendorfer, H.P. Frank, Kunststoffe 70 (1980) page 98 -101. The "Stress Whitening limit extension" is calculated with the aid of a tangent method from the Turbidity/Elongation-Diagram as that particular elongation, below which stress whitening does not occur.

**Examples**

The polymers which were used for the examples and comparative examples are characterised in table 1. Polymers 1 to 3 are ethylene-propylene heterophasic copolymers, produced in multistage low-pressure polymerisation. PE1 and PE2 are LDPE's produced in a high-pressure process and PE3 is an LLDPE produced with a suitable single-site catalyst. All PE modifiers selected for the examples E1 through E7 exhibit strain-hardening behaviour in the Rheotens test at 230°C.

For the comparative examples (C1 through C6) the non-modified polymers were used and modifications were made with a nucleating agent, a PE plastomer (PE4: Engage EG8180) and an HDPE grade (PE5). The characteristics of the example and comparative compositions are shown in Table 2.

The PE plastomer PE4 and HDPE grade PE5 do not show strain hardening.

The modified PP compositions were produced on a 24mm twin screw extruder (PRISM TSE24) at a melt temperature of 200-240°C, using a strand pelletisation process.

Table 1

| Base Polymer | MFR 230°C/2,16kg g/10min | C2 (total) mol% | Tm DSC °C | IRτ FTIR - |
|---|---|---|---|---|
| polymer 1 | 10,2 | 12 | 165 | 0,985 |
| polymer 2 | 3,8 | 10 | 164 | 0,980 |
| polymer 3 | 0,9 | 11 | 164 | 0,977 |
| **Modifier** | **MFR PE 190 °C/2, 16 kg g/10 min** | **Density PE g/cm³** | **Comonomer type** | |
| PE1 | 0,25 | 0,920 | C6 | |
| PE2 | 3,0 | 0,924 | C6 | |
| PE3 | 0,25 | 0,923 | C6 | |
| PE4 (Engage 8180) | 1,0 | 0,870 | C8 | |
| PE5 | 31,0 | 0,960 | C6 | |

Table 2

| Example | Base Polymer type | Modifier (PE) type | Modifier amount wt% | Nucleant type/amt. - / wt% | Ratio MFR mix/base - | MFR mix 230°C/2,16kg g/10min | Tensile modulus MPa | NIS +23°C ISO1791eA kJ/m² | NIS -20°C ISO1791eA kJ/m² | SW limit extens. % |
|---|---|---|---|---|---|---|---|---|---|---|
| E1 | polymer 1 | PE1 | 10 | - / 0 | 0,86 | 8,8 | 913 | 25,2 | 6,5 | 2,8 |
| E2 | polymer 1 | PE1 | 10 | NA21 / 0,1 | 0,88 | 9 | 1095 | 13,7 | 6,9 | 2,5 |
| E3 | polymer 1 | PE2 | 10 | - / 0 | 0,87 | 8,9 | 915 | 13,2 | 5,9 | 3,0 |
| E4 | polymer 1 | PE3 | 10 | - / 0 | 0,80 | 8,2 | 960 | 24,6 | 7,2 | 2,8 |
| E5 | polymer 2 | PE1 | 15 | - / 0 | 0,71 | 2,7 | 890 | 73,4 | 9,4 | 2,8 |
| E6 | polymer 2 | PE3 | 10 | - / 0 | 0,87 | 3,3 | 980 | 70,9 | 8,9 | 2,9 |
| E7 | polymer 3 | PE3 | 10 | - / 0 | 0,97 | 0,8 | 990 | 54 | 4,3 | 6,1 |
|  |  |  |  |  |  |  |  |  |  |  |
| C1 | polymer 1 | - | 0 | - / 0 | 1,00 | 10,2 | 1070 | 10,4 | 5,5 | 2,3 |
| C2 | polymer 1 | - | 0 | NA11 / 0,1 | 0,98 | 10 | 1220 | 9,3 | 5,2 | 2,3 |
| C3 | polymer 2 | PE4 | 10 | - / 0 | 0,97 | 3,7 | 880 | 75,3 | 8,7 | 2,3 |
| C4 | polymer 2 | PE5 | 15 | - / 0 | 1,26 | 4,8 | 1020 | 42,5 | 5,8 | 2,9 |
| C5 | polymer 2 | - | 0 | - / 0 | 1,00 | 3,8 | 1095 | 53,3 | 7 | 2,7 |
| C6 | polymer 3 | - | 0 | - / 0 | 1,00 | 0,9 | 1213 | 33,2 | 2,6 | 4,6 |

**Claims**

1. A polypropylene composition having an improved balance of impact strength and resistance to stress whitening, comprising

   A) 70 - 98 wt% of a heterophasic propylene copolymer comprising

   a1) a propylene homopolymer matrix phase having an isotacticity IR$\tau \geq$ 0,97 and a melting temperature $T_m$ > 160 °C and

   a2) a disperse phase comprising a propylene copolymer with ethylene and/or one or more $C_4$-$C_{12}$-$\alpha$-olefins,
   said disperse phase being predominantly amorphous and further comprising crystalline inclusions

   said heterophasic copolymer comprising 2 - 20 wt% ethylene and/or one or more $C_4$-$C_{12}$-$\alpha$-olefins,

   B) 2 - 30 wt% of an ethylene polymer comprising 0 - 5 wt% of one or more $C_4$-$C_{12}$-$\alpha$-olefins, the ethylene polymer exhibiting strain hardening behaviour and having a density $\rho \leq$ 930 kg/m$^3$,

   the polypropylene composition having an MFR$_{FM}$ of from 0,5 - 500 g/10 min (230 °C/2, 16 kg) and where the relation between MFR$_A$ (230°C/2,16 kg) of the heterophasic propylene copolymer and MFR$_{FM}$ is according to the equation

   $$0{,}7 \times MFR_A \leq MFR_{FM} \leq 1{,}2 \times MFR_A.$$

2. Polypropylene composition according to claim 1, **characterised in that** it comprises up to 1 wt%, based on the entire polypropylene composition, of $\alpha$-nucleating agents.

3. Polypropylene composition according to claim 1 or 2, **characterised in that** it comprises up to 5 wt%, based on the entire polypropylene composition, of amorphous hydrocarbon resins having a glass transition temperature $T_g$ < 23 °C.

4. Polypropylene composition according to one of claims 1 to 3, **characterised in that** it comprises 80 - 95 wt% of A) and 5 - 20 wt% of B).

5. Process for producing a polypropylene composition having an improved balance of impact strength and resistance to stress whitening, comprising mixing
   70 - 98 wt% of a heterophasic propylene copolymer A) comprising

   a1) a propylene homopolymer matrix phase having an isotacticity IR$\tau \geq$ 0,97 and a melting temperature $T_m$ > 160 °C and

   a2) a disperse phase comprising a propylene copolymer with ethylene and/or one or more $C_4$-$C_{12}$-$\alpha$-olefins,
   said disperse phase being predominantly amorphous and further comprising crystalline inclusions

   with
   2 - 30 wt% of an ethylene polymer B) comprising 0 - 5 wt% of one or more $C_4$-$C_{12}$-$\alpha$-olefins, the ethylene polymer exhibiting strain hardening behaviour and having a density $\rho \leq$ 930 kg/m$^3$,
   the polypropylene composition having an MFR$_{FM}$ of from 0,5 - 500 g/10 min (230 °C/2,16 kg) and where the relation between MFR$_A$ (230 °C/2,16 kg) of the heterophasic propylene copolymer and MFR$_{FM}$ is according to the equation

   $$0{,}7 \times MFR_A \leq MFR_{FM} \leq 1{,}2 \times MFR_A,$$

   homogenising and melting the mixture.

6. Process according to claim 5, **characterised in that** it comprises adding up to 1 wt% based on the polypropylene composition of one or more α-nucleating agents.

7. Process according to claim 5 or 6, **characterised in that** it comprises adding up to 5 wt%, based on the entire polypropylene composition, of amorphous hydrocarbon resins having a glass transition temperature $T_g < 23\ °C$.

8. Use of a polymer composition according to one of claims 1-4 for the production of injection-moulded, blow moulded or injection stretch blow moulded articles for packaging applications or technical purposes.

**European Patent Office**

## EUROPEAN SEARCH REPORT

Application Number

EP 03 01 8363

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 211 289 A (BOREALIS GMBH) 5 June 2002 (2002-06-05) * abstract; claims 1-11 * * page 2, line 3-9,16,17 * * page 3, line 16-50 * * page 4, line 7-12,23-28 * | 1,2,4-6, 8 | C08L23/10 C08L23/12 |
| X | EP 0 863 183 A (CHISSO CORP) 9 September 1998 (1998-09-09) * abstract; claims 1-30 * * page 4, line 5 * | 1,2,4-6, 8 | |
| X | WO 01 77224 A (ALASTALO KAUNO ;POIKELA MERJA (FI); BOREALIS TECH OY (FI); JAASKEL) 18 October 2001 (2001-10-18) * abstract; claims 1-20 * * page 5, line 16-37 * * page 6, line 1-35 * * page 7, line 1-22 * * page 15, line 35-38 * * page 16, line 24-37 * * page 17, line 18 * * page 18, line 15-29 * * page 20, line 24 * | 1,4,5,8 | |
| | | | TECHNICAL FIELDS SEARCHED (Int.Cl.7) |
| | | | C08L |
| D,X | EP 1 236 769 A (BOREALIS TECH OY) 4 September 2002 (2002-09-04) * abstract; claims 1-11 * * page 2, line 29-53 * * page 3, line 3-60 * * page 4, line 1-45 * | 1-8 | |

The present search report has been drawn up for all claims

| Place of search | Date of completion of the search | Examiner |
|---|---|---|
| THE HAGUE | 27 November 2003 | Bergmans, K |

EPO FORM 1503 03.82 (P04C01)

**ANNEX TO THE EUROPEAN SEARCH REPORT
ON EUROPEAN PATENT APPLICATION NO.**

EP 03 01 8363

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2003

| Patent document cited in search report | | Publication date | Patent family member(s) | | Publication date |
|---|---|---|---|---|---|
| EP 1211289 | A | 05-06-2002 | EP | 1211289 A1 | 05-06-2002 |
| | | | AU | 2368502 A | 11-06-2002 |
| | | | WO | 0244272 A1 | 06-06-2002 |
| | | | EP | 1358266 A1 | 05-11-2003 |
| EP 0863183 | A | 09-09-1998 | AT | 215571 T | 15-04-2002 |
| | | | AU | 7638796 A | 11-06-1997 |
| | | | BR | 9611825 A | 13-07-1999 |
| | | | DE | 69620440 D1 | 08-05-2002 |
| | | | DE | 69620440 T2 | 29-08-2002 |
| | | | EP | 0863183 A1 | 09-09-1998 |
| | | | US | 6300415 B1 | 09-10-2001 |
| | | | CN | 1205726 A ,B | 20-01-1999 |
| | | | WO | 9719135 A1 | 29-05-1997 |
| | | | JP | 2002249626 A | 06-09-2002 |
| | | | JP | 2003246900 A | 05-09-2003 |
| | | | TW | 486501 B | 11-05-2002 |
| WO 0177224 | A | 18-10-2001 | AU | 4670401 A | 23-10-2001 |
| | | | EP | 1272559 A1 | 08-01-2003 |
| | | | WO | 0177224 A1 | 18-10-2001 |
| | | | US | 2003176603 A1 | 18-09-2003 |
| EP 1236769 | A | 04-09-2002 | EP | 1236769 A1 | 04-09-2002 |
| | | | WO | 02072693 A1 | 19-09-2002 |

For more details about this annex : see Official Journal of the European Patent Office, No. 12/82